# EUROPEAN PATENT APPLICATION

(11) **EP 4 084 439 A1**
(43) Date of publication of application: **02.11.2022**
(21) Application number: 22152903.5
(22) Date of filing: 24.01.2022
(51) Int. Cl.: H04L 41/12, H04L 41/22, H04L 43/0817

(54) **NETWORK MAP CREATION SUPPORT PROGRAM, INFORMATION PROCESSING APPARATUS, AND NETWORK MAP CREATION SUPPORT METHOD**

(30) Priority: 28.04.2021 JP 2021076309
(71) Applicant: FUJITSU LIMITED, Kawasaki-shi, Kanagawa 211-8588 (JP)
(72) Inventor: Takahara, Tomoaki, Kawasaki-shi, Kanagawa, 211-8588 (JP); Ohmachi, Keiichi, Kawasaki-shi, Kanagawa, 211-8588 (JP); Niioka, Fumiki, Kawasaki-shi, Kanagawa, 211-8588 (JP); Uchiyama, Toshikazu, Kawasaki-shi, Kanagawa, 211-8588 (JP); Shioya, Katsuhiko, Kawasaki-shi, Kanagawa, 211-8588 (JP); Arakawa, Takahiro, Kawasaki-shi, Kanagawa, 211-8588 (JP)
(74) Representative: Hoffmann Eitle

(57) **Abstract**

A network map creation support program in which a computer executes performs processing of: calculating, for each of a plurality of nodes, an evaluation value indicating a possibility that the node is connected to a target switch port of the plurality of switches based on information indicating measurement results related to communication data of a network including the plurality of nodes and the plurality of switches, or a coupling environment of the plurality of nodes and the plurality of switches in the network, displaying figures respectively representing the plurality of nodes in descending order of the evaluation value starting from a position nearest to a figure representing the target switch port, and receiving a selection of one of the plurality of nodes as a node to be coupled to the target switch port in a network map.

## Description

### [Technical Field]

The embodiments discussed herein are related to a network map creation support program, an information processing apparatus, and a network map creation support method.

### [Background Art]

In recent years, multiple types of devices are linked with each other in a network of a data center. A network map may be created to manage devices in such a complex network.

For example, the network map provides a display on which devices connected to each other in a network are linked with lines. For example, when an abnormality occurs in a network, an administrator of the network may quickly locate an influence range of the abnormality by referring to the network map.

As a technique related to a network map, there has been proposed, for example, a wiring information creation system capable of creating information on physical wiring between physical ports of switching devices and communication ports of communication devices.

### [Citation List]

### [Patent Literature]

International Publication Pamphlet No. WO 2020/217300.

### [Summary]

### [Problem]

In one of conceivable methods of creating a network map, for example, a user selects a device connected to each of devices in a network. However, when the network includes a large number of devices, the selection work is complicated.

According to one aspect, the present disclosure has an object to facilitate creation of a network map.

### [Solution to Problem]

According to one embodiment, A network map creation support program in which a computer executes performs processing of: calculating, for each of a plurality of nodes, an evaluation value indicating a possibility that the node is connected to a target switch port of the plurality of switches based on information indicating measurement results related to communication data of a network including the plurality of nodes and the plurality of switches, or a coupling environment of the plurality of nodes and the plurality of switches in the network, displaying figures respectively representing the plurality of nodes in descending order of the evaluation value starting from a position nearest to a figure representing the target switch port, and receiving a selection of one of the plurality of nodes as a node to be coupled to the target switch port in a network map.

### [Effects of Invention]

According to one aspect, creation of a network map is facilitated.

### [Brief Description of Drawings]

FIG. 1 is a diagram illustrating an example of a network map creation support method according to a first embodiment;
FIG. 2 is a diagram illustrating an overview of a second embodiment;
FIG. 3 is a diagram illustrating an example of a hardware structure of an administration terminal;
FIG. 4 is a diagram illustrating an example of a network map;
FIG. 5 is a block diagram illustrating an example of functions of the administration terminal;
FIG. 6 is a diagram illustrating an example of information on devices included in a network;
FIG. 7 is a diagram illustrating an example of a rack determination;
FIG. 8 is a diagram illustrating an example of an address table determination;
FIG. 9 is a diagram illustrating an example of a communication traffic determination;
FIG. 10 is a diagram illustrating an example of a communication speed determination;
FIG. 11 is a diagram illustrating an example of a link determination;
FIG. 12 is a diagram illustrating an example of an evaluation value table;
FIG. 13 is a diagram illustrating an example of a screen for creating a network map;
FIG. 14 is a flowchart illustrating an example of a procedure of an evaluation value calculation process;
FIG. 15 is a flowchart illustrating an example of a procedure of a rack determination process;
FIG. 16 is a flowchart illustrating an example of a procedure of an address table determination process;
FIG. 17 is a flowchart illustrating an example of a procedure of a communication traffic determination process;
FIG. 18 is a flowchart illustrating an example of a procedure of a communication speed determination process;
FIG. 19 is a flowchart illustrating an example of a procedure of a link determination process; and
FIG. 20 is a flowchart illustrating an example of a procedure of a network map creation process.

### [Description of Embodiments]

Hereinafter, embodiments will be described with reference to the drawings. A plurality of the embodiments may be implemented in combination without causing inconsistency.

### [First Embodiment]

First, a first embodiment will be described.

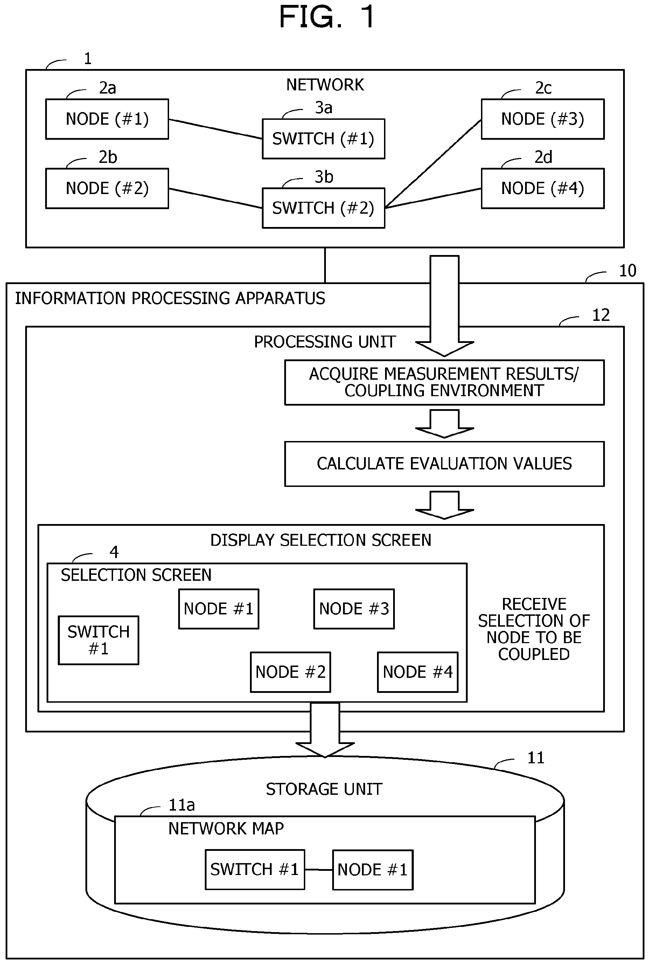

FIG. 1 is a diagram illustrating an example of a network map creation support method according to the first embodiment. FIG. 1 illustrates an information processing apparatus 10 that performs a network map creation support method. For example, the information processing apparatus 10 may perform the network map creation support method by executing a network map creation support program in which procedures of processes in the network map creation support method are written.

The information processing apparatus 10 supports creation of a network map indicating connecting relationships between devices in a network 1. The network 1 includes nodes 2a, 2b, 2c, and 2d (nodes #1, #2, #3, and #4) and switches 3a and 3b (switches #1 and #2). In the network 1, for example, the node 2a is connected to one of switch ports of the switch 3a. For example, the node 2b is connected to one of switch ports of the switch 3b. For example, the node 2c is connected to one of the switch ports of the switch 3b. For example, the node 2d is connected to one of the switch ports of the switch 3b.

The information processing apparatus 10 includes a storage unit 11 and a processing unit 12 in order to implement the network map creation support method. For example, the storage unit 11 is a memory or a storage device included in the information processing apparatus 10. For example, the processing unit 12 is a processor or an arithmetic circuit included in the information processing apparatus 10. The storage unit 11 stores a network map 11a. The network map 11a is a network map indicating connecting relationships between devices in the network 1.

First, the processing unit 12 acquires information indicating measurement results related to communication data in the network 1 or a coupling environment of the nodes 2a to 2d and the switches 3a and 3b. For example, the processing unit 12 acquires information indicating in which rack each of the nodes 2a to 2d and the switches 3a and 3b is installed. For example, the processing unit 12 acquires information indicating communication addresses of the respective nodes 2a to 2d and communication addresses of respective devices connected to the switches 3a and 3b. The communication address is, for example, a media access control (MAC) address, and the information indicating the communication addresses of the devices connected to the switches 3a and 3b is, for example, information registered in MAC address tables of the switches 3a and 3b.

For example, the processing unit 12 performs a process for each of the nodes 2a to 2d, the process including transmitting data to one of the nodes 2a to 2d and measuring the cumulative communication traffic of each of the switch ports of the switches 3a and 3b before and after the data transmission. For example, the processing unit 12 performs a process for each of the switch ports of the switches 3a and 3b, the process including changing a communication speed of one of the switch ports of the switches 3a and 3b to a predetermined speed, and measuring a communication speed of each of the nodes 2a to 2d before and after the change in the communication speed. For example, the processing unit 12 performs a process for each of the nodes 2a to 2d, the process including measuring a communication status of each of the switch ports of the switches 3a and 3b when one of the nodes 2a to 2d is linked down.

Based on the acquired information indicating the measurement results or the coupling environment, the processing unit 12 calculates an evaluation value for each of nodes 2a to 2d indicating a possibility that the node 2a to 2d is connected to a target switch port among the switch ports of the switches 3a and 3b. For example, the processing unit 12 calculates the evaluation value for each of nodes 2a to 2d based on whether or not each of the nodes 2a to 2d is installed in the same rack as the switch including the target switch port. The processing unit 12 adds points to the evaluation value for a node installed in the same rack as the switch including the target switch port among the nodes 2a to 2d.

For example, the processing unit 12 calculates the evaluation value for each of nodes 2a to 2d based on information indicating the communication address of each of the nodes 2a to 2d and the communication address of a device connected to the target switch port. The processing unit 12 adds points to the evaluation value for a node having a MAC address registered as a device connected to the target switch port in the MAC address table of the switch including the target switch port among the nodes 2a to 2d. For example, the processing unit 12 calculates the evaluation value for each of nodes 2a to 2d based on measurement results of the cumulative communication traffic of the target switch port before and after data transmission to each of the nodes 2a to 2d. When the cumulative communication traffic of the target switch port is increased by the size of transmitted data before and after data transmission to a certain node, the processing unit 12 adds points to the evaluation value for the certain node.

For example, the processing unit 12 calculates the evaluation value for each of nodes 2a to 2d based on measurement results of the communication speed of each of the nodes 2a to 2d before and after the communication speed of the target switch port is changed to a predetermined speed. The processing unit 12 adds points to the evaluation value for a node having a predetermined communication speed when the communication speed of the target switch port is changed to the predetermined speed among the nodes 2a to 2d. For example, the processing unit 12 calculates the evaluation value for each of nodes 2a to 2d based on whether or not communication of the target switch port is stopped when each of the nodes 2a to 2d is linked down. In a case where communication of the target switch port is stopped when a certain node is linked down, the processing unit 12 adds points to the evaluation value for the certain node.

As an example, the processing unit 12 calculates the evaluation values for the nodes 2a to 2d herein in a case where a switch port of the switch 3a is set as a target switch port. The calculated evaluation values are assumed to be larger in the order of the node 2a, the node 2b, the node 2c, and the node 2d.

Then, the processing unit 12 displays a selection screen 4. The processing unit 12 displays the selection screen 4 such that figures representing the respective nodes 2a to 2d are arranged in descending order of the evaluation value starting from near (the position nearest to) a figure representing the target switch port. For example, the selection screen 4 includes a block marked with "switch #1", a block marked with "node #1", a block marked with "node #2", a block marked with "node #3", and a block marked with "node #4". On the selection screen 4, the block marked with "node #1", the block marked with "node #2", the block marked with "node #3", and the block marked with "node #4" are arranged in this order starting from near the block marked with "switch #1".

The processing unit 12 receives a selection of one of the nodes 2a to 2d as a node to be connected to the target switch port in the network map 11a. For example, the processing unit 12 receives an input of linking the figure representing the target switch port and the figure representing a node on the selection screen 4. As an example, the processing unit 12 receives an input of linking the block marked with "switch #1" and the block marked with "node #1". As a result, the processing unit 12 registers information indicating that the node 2a and one of the switch ports of the switch 3a are connected to each other in the network map 11a.

According to the information processing apparatus 10 as described above, the processing unit 12 calculates the evaluation values for each of the nodes 2a to 2d based on the information indicating the measurement results related to the communication data in the network 1 or the coupling environment of the nodes 2a to 2d and the switches 3a and 3b. The processing unit 12 displays the figures representing each of the nodes 2a to 2d in descending order of the evaluation value starting from the position nearest to the figure representing the target switch port. The processing unit 12 receives a selection of one of the nodes 2a to 2d as a node to be coupled to the target switch port in the network map 11a. In this way, the information processing apparatus 10 is capable of providing a display that enables a user to, when selecting a node to be coupled to a target switch port in the network map 11a, easily select a node having a high possibility of being coupled to the target switch port in the network 1. Accordingly, the information processing apparatus 10 may facilitate creation of the network map 11a.

The processing unit 12 calculates the evaluation value for each node 2a to 2d based on whether each of the nodes 2a to 2d is installed in the same rack as the switch including the target switch port. In this way, the information processing apparatus 10 is capable of providing a display such that a node installed in the same rack as the switch including the target switch port may be easily selected as a node to be coupled to the target switch port in the network map 11a.

The processing unit 12 calculates the evaluation value for each of nodes 2a to 2d based on information indicating the communication address of each of the nodes 2a to 2d and the communication address of the device coupled to the target switch port. As a result, the information processing apparatus 10 is capable of providing a display such that the node having the same communication address as the communication address of the device connected to the target switch port may be easily selected as a node to be coupled to the target switch port in the network map 11a.

The processing unit 12 calculates the evaluation value for each of nodes 2a to 2d based on the measurement results of the cumulative communication traffic of the target switch port before and after the data transmission to each the nodes 2a to 2d. As a result, in a case where the cumulative communication traffic of the target switch port is increased by the size of transmitted data before and after data transmission to a certain node, the information processing apparatus 10 is capable of providing a display such that the certain node may be easily selected as a node to be connected to the target switch port in the network map 11a.

The processing unit 12 calculates the evaluation value for each of nodes 2a to 2d based on the measurement results of the communication speed of each of the nodes 2a to 2d before and after the communication speed of the target switch port is changed to a predetermined speed. Thus, the information processing apparatus 10 is capable of providing a display such that the node having the predetermined communication speed when the communication speed of the target switch port is changed to the predetermined speed may be easily selected as a node to be coupled to the target switch port in the network map 11a.

The processing unit 12 calculates the evaluation value for each of nodes 2a to 2d based on whether or not communication of the target switch port is stopped when each of the nodes 2a to 2d is linked down. Thus, in a case where communication of the target switch port is stopped when a certain node is linked down, the information processing apparatus 10 is capable of providing a display such that the certain node may be easily selected as a node to be coupled to the target switch port in the network map 11a.

Alternatively, the processing unit 12 may calculate an evaluation value for each of node ports of the nodes 2a to 2d. In this case, the processing unit 12 may display figures representing the respective multiple node ports in descending order of the evaluation value starting from the position nearest to the figure representing the target switch port, and may receive a selection of one of the multiple node ports as a node port to be coupled to the target switch port in the network map 11a. Thus, the information processing apparatus 10 may facilitate creation of the network map 11a indicating a port coupled to each of the node ports of the nodes 2a to 2d.

### [Second Embodiment]

Next, a second embodiment will be described. The second embodiment supports creation of a network map indicating a network in a data center.

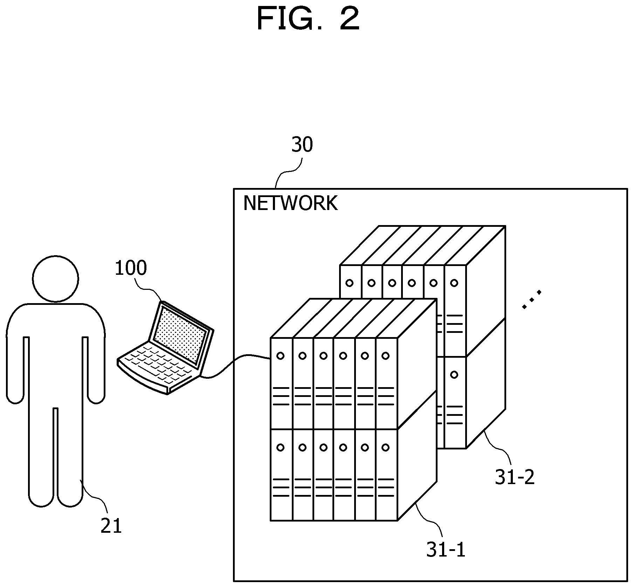

FIG. 2 is a diagram illustrating an overview of the second embodiment. According to the second embodiment, an administrator 21 uses an administration terminal 100 to create a network map of a network 30. The network 30 is a network in a data center. The network 30 includes server groups 31-1, 31-2, ....

The server group 31-1 includes multiple servers and multiple switches. The multiple servers and the multiple switches included in the server group 31-1 are installed in the same rack. As is the case with the server group 31-1, each of the server groups 31-2, ... also includes multiple servers and multiple switches installed in the same rack.

The administration terminal 100 is a computer operated by the administrator 21. The administration terminal 100 collects data to be used for creating a network map and creates the network map. For data collection, the administration terminal 100 is connected to a switch (investigation target switch) included in the network 30. The administration terminal 100 measures the communication status of each switch port of the investigation target switch. Via the investigation target switch, the administration terminal 100 accesses each server included in the network 30 and measures a communication status of each server.

From the collected data, the administration terminal 100 calculates an evaluation value indicating a possibility that each server included in the network 30 is coupled to a switch port of each switch. For creating a network map, the administration terminal 100 displays a server having a large evaluation value near the switch port, and receives a selection of a server to be connected to the switch port. The administration terminal 100 reflects the selection result of the server to be connected to the switch port in the network map.

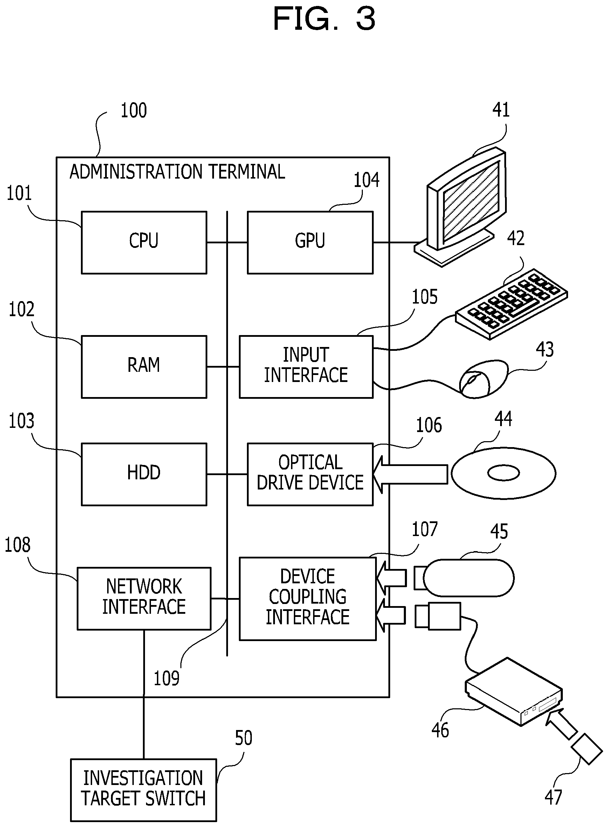

FIG. 3 is a diagram illustrating an example of a hardware structure of the administration terminal. The administration terminal 100 is entirely controlled by a central processing unit (CPU) 101. The CPU 101 is a processor that executes instructions of a program. The CPU 101 may include multiple processor cores. The CPU 101 may include multiple processors, or may be a microprocessor unit (MPU), a digital signal processor (DSP), or the like. At least part of the functions implemented by the CPU 101 executing the program may be implemented by an electronic circuit such as an application-specific integrated circuit (ASIC) or a programmable logic device (PLD). A random-access memory (RAM) 102 and multiple peripheral devices are coupled to the CPU 101 via a bus 109.

The RAM 102 is a main storage device of the administration terminal 100. The RAM 102 temporarily stores at least part of an operating system (OS) program and application programs to be executed by the CPU 101. The RAM 102 also stores various kinds of data to be used in processes by the CPU 101. The administration terminal 100 may include another type of memory different from the RAM, or may include multiple memories.

The peripheral devices coupled to the bus 109 include a hard disk drive (HDD) 103, a graphics processing unit (GPU) 104, an input interface 105, an optical drive device 106, a device coupling interface 107, and a network interface 108.

The HDD 103 is an auxiliary storage device of the administration terminal 100. The HDD 103 magnetically writes and reads data to and from a built-in magnetic disk. The HDD 103 stores the OS program, the application programs, and various kinds of data. The administration terminal 100 may include another type of auxiliary storage device such as a flash memory or a solid-state drive (SSD), or may include multiple auxiliary storage devices.

A monitor 41 is coupled to the GPU 104. The GPU 104 causes the monitor 41 to display an image on a screen of the monitor 41 in accordance with an instruction from the CPU 101. Examples of the monitor 41 include a display device using organic electro luminescence (EL), a liquid crystal display device, and the like.

A keyboard 42 and a mouse 43 are coupled to the input interface 105. The input interface 105 transmits signals sent from the keyboard 42 and the mouse 43 to the CPU 101. The mouse 43 is an example of a pointing device, and any of other pointing devices may be used. Examples of the other pointing devices include a touch panel, a tablet, a touch pad, a trackball, and the like.

The optical drive device 106 uses laser light or the like to read data stored in an optical disc 44. The optical disc 44 is a portable recording medium in which data is recorded such that the data is readable through reflection of light. Examples of the optical disc 44 include a Digital Versatile Disc (DVD), a DVD-RAM, a compact disc read-only memory (CD-ROM), a CD-recordable (CD-R), a CD-rewritable (CD-RW), and the like.

The device coupling interface 107 is a communication interface for coupling peripheral devices to the administration terminal 100. For example, a memory device 45 and a memory reader/writer 46 may be coupled to the device coupling interface 107. The memory device 45 is a recording medium equipped with the function of communication with the device coupling interface 107. The memory reader/writer 46 is a device that writes data to a memory card 47 or reads data from the memory card 47. The memory card 47 is a card-type recording medium.

The network interface 108 is connected to an investigation target switch 50 included in the network 30. Through the investigation target switch 50, the network interface 108 may transmit and receive data to and from a computer or a communication device in the network 30. The network interface 108 may be connected to a network other than the network 30. The network interface 108 may also transmit and receive data to and from another computer or another communication device via the other network.

Having the hardware configuration as described above, the administration terminal 100 is capable of implementing processing functions according to the second embodiment. The information processing apparatus 10 described in the first embodiment may also be implemented by the same hardware as the administration terminal 100 illustrated in FIG. 3. The CPU 101 is an example of the processing unit 12 described in the first embodiment. The RAM 102 or the HDD 103 is an example of the storage unit 11 described in the first embodiment.

For example, the administration terminal 100 implements the processing functions according to the second embodiment by executing a program recorded in a computer-readable recording medium. A program in which processing details to be executed by the administration terminal 100 are described may be recorded in any of various recording media. For example, the program to be executed by the administration terminal 100 may be stored in the HDD 103. The CPU 101 loads at least part of the program in the HDD 103 into the RAM 102 and executes the program. The program to be executed by the administration terminal 100 may be recorded on a portable recording medium such as the optical disc 44, the memory device 45, or the memory card 47. For example, the program stored in the portable recording medium may be installed in the HDD 103 and thereafter executed under the control of the CPU 101. Instead, the CPU 101 may directly read the program from the portable recording medium and execute the program.

Next, a network map will be described.

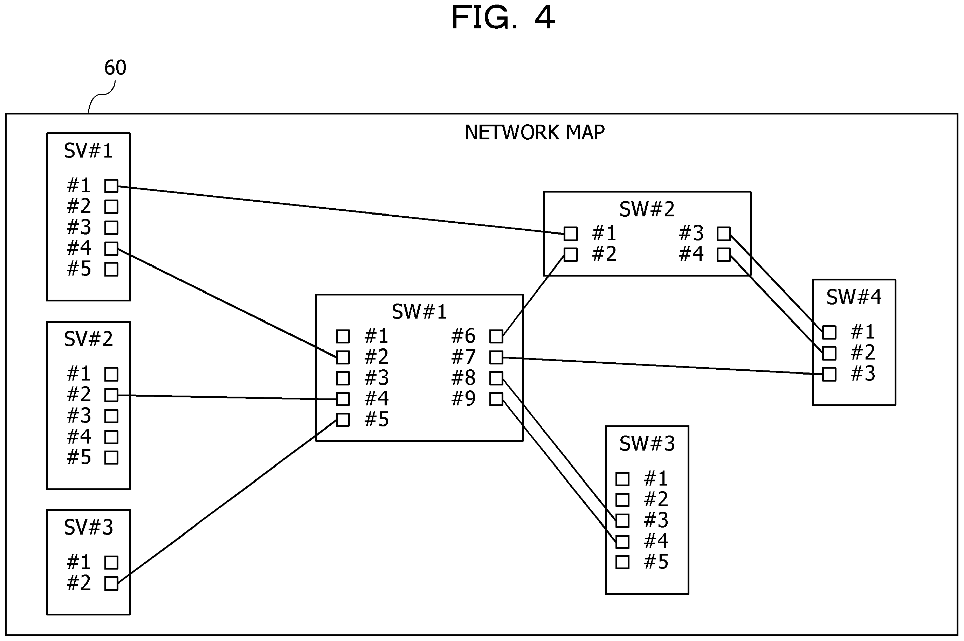

FIG. 4 is a diagram illustrating an example of a network map. A network map 60 indicates connecting relationships between devices included in a network to be managed (for example, the network 30). The network map 60 includes figures representing the respective ports of devices included in the network 30, and indicates that ports linked by a line are coupled to each other. For example, the network map 60 indicates that a port #1 of a server (SV) #1 and a port #1 of a switch (SW) #2 are coupled to each other. In the case of occurrence of an abnormality in the network 30, the administrator 21 may quickly locate an influence range by referring to the network map 60.

One of conceivable methods of creating the network map 60 is, for example, to display figures representing the respective ports of servers and switches on a graphical user interface (GUI) and receive a selection of each pair of ports coupled to each other. However, when the network 30 includes a large number of devices, an operation of selecting coupled ports is complicated. Another conceivable method of creating the network map 60 is to identify a port coupled to each port by using a link layer discovery protocol (LLDP), for example. However, some devices included in the network 30 may not support LLDP.

Under these circumstances, the administration terminal 100 in the second embodiment calculates an evaluation value indicating a possibility that a server port of each server included in the network 30 is connected to a switch port of each switch. The administration terminal 100 displays a figure representing a server port having a large evaluation value near the figure representing the switch port and receives a selection of a server port to be coupled to the switch port, thereby facilitating an operation of selecting a server port to be connected.

Next, functions of the administration terminal 100 will be described in detail.

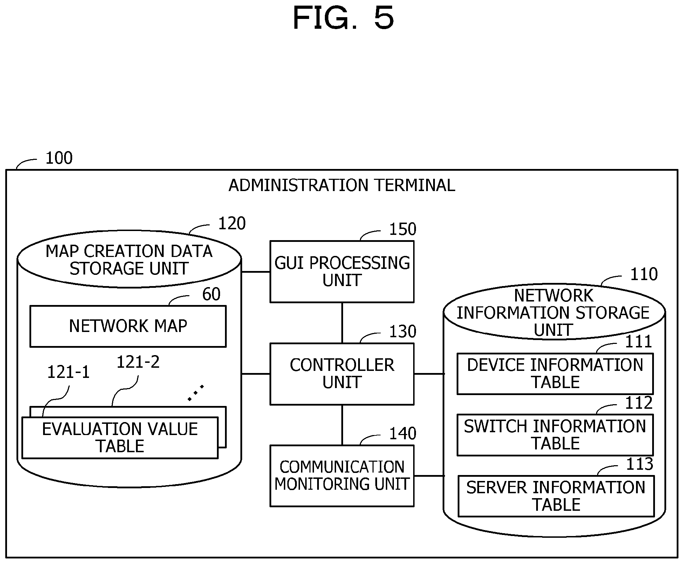

FIG. 5 is a block diagram illustrating an example of functions of the administration terminal. The administration terminal 100 includes a network information storage unit 110, a map creation data storage unit 120, a controller unit 130, a communication monitoring unit 140, and a GUI processing unit 150.

The network information storage unit 110 stores a device information table 111, a switch information table 112, and a server information table 113. Information on the devices (switches and servers) included in the network 30 is registered in the device information table 111. Information on the switches included in the network 30 is registered in the switch information table 112. Information on the servers included in the network 30 is registered in the server information table 113.

The map creation data storage unit 120 stores the network map 60 and evaluation value tables 121-1, 121-2, .... Each of the evaluation value tables 121-1, 121-2, ... is prepared for any one of the switch ports of the switches included in the network 30. Each of the evaluation value tables 121-1, 121-2, ... registers the evaluation values for the respective server ports of the servers included in the network 30 with respect to the associated switch port.

The controller unit 130 executes determination processes for calculating the evaluation values with respect to each switch port of the investigation target switch 50. The controller unit 130 executes a rack determination process, an address table determination process, a communication traffic determination process, a communication speed determination process, and a link determination process.

In the rack determination process, the controller unit 130 first refers to the device information table 111 and acquires the rack name of a rack in which the investigation target switch 50 is installed. Next, the controller unit 130 refers to the device information table 111 to search for a server installed in the same rack as the investigation target switch 50. In the evaluation value table for each switch port of the investigation target switch 50 among the evaluation value tables 121-1, 121-2, ..., the controller unit 130 adds points for each server port of the searched-out server.

In the address table determination process, the controller unit 130 first acquires a MAC address table from the investigation target switch 50. Next, the controller unit 130 identifies a server port coupled to each switch port of the investigation target switch 50 from the MAC addresses registered in the MAC address table and the server information table 113. In the evaluation value table for each switch port of the investigation target switch 50 among the evaluation value tables 121-1, 121-2, ..., the controller unit 130 adds points for the server port identified as the coupled server port.

In the communication traffic determination process, the controller unit 130 first selects a server port and transmits 50 MB data to the selected server port. Then, the controller unit 130 causes the communication monitoring unit 140 to acquire the cumulative communication traffic of each switch port of the investigation target switch 50 before and after the data transmission. When there is a certain switch port whose cumulative communication traffic is increased by 50 MB before and after the data transmission, the controller unit 130 adds points for the selected server port in the evaluation value table for the certain switch port among the evaluation value tables 121-1, 121-2, ....

In the communication speed determination process, the controller unit 130 selects a switch port of the investigation target switch 50, and causes the communication monitoring unit 140 to change a communication speed of the selected switch port to 10 Mbps. Then, the controller unit 130 causes the communication monitoring unit 140 to acquire the communication speed of each server port before and after the change in the communication speed. When there is a certain server port whose communication speed is changed to 10 Mbps before and after the change in the communication speed, the controller unit 130 adds points for the certain server port in the evaluation value table for the selected switch port.

In the link determination process, the controller unit 130 first causes the communication monitoring unit 140 to acquire the cumulative communication traffic and the communication speed of each switch port of the investigation target switch 50 before and after a link-down of a server port and before and after a link-up of the server port. When there is a certain switch port in which communication is stopped along with the link-down and is restarted along with the link-up, the controller unit 130 adds points for the server port having the link-down and the link-up in the evaluation value table for the certain switch port. After the above-described determinations, the controller unit 130 calculates the total of the points added according to all the determinations.

The communication monitoring unit 140 acquires the cumulative communication traffic of each switch port of the investigation target switch 50 in accordance with an instruction from the controller unit 130. The communication monitoring unit 140 acquires the communication speeds of each server port and each switch port of the investigation target switch 50 in accordance with an instruction from the controller unit 130. The communication monitoring unit 140 changes the communication speed of a switch port in accordance with an instruction from the controller unit 130.

The GUI processing unit 150 displays figures representing the switch ports and figures representing the server ports, and receives a selection of a port to be connected to each port in the network map 60. The GUI processing unit 150 displays multiple figures representing multiple switch ports and receives a selection. The GUI processing unit 150 acquires an evaluation value table for the switch port selected in step S161 among the evaluation value tables 121-1, 121-2, .... By referring to the acquired evaluation value table, the GUI processing unit 150 displays figures representing multiple server ports such that the figure representing a server port having a large evaluation value with respect to the selected switch port is near to the figure representing the selected switch port. The GUI processing unit 150 receives a selection of a server port to be coupled to the selected switch port in the network map 60. For example, the GUI processing unit 150 reflects the selection of the to-be-coupled server port in the network map 60.

Note that, the lines coupling the elements illustrated in FIG. 5 indicate some communication paths, and communication paths other than the communication paths illustrated in FIG. 5 may be set. The function of each of the elements illustrated in FIG. 5 may be implemented, for example, by causing a computer to execute a program module corresponding to the element.

Next, the information stored in the network information storage unit 110 will be described in detail.

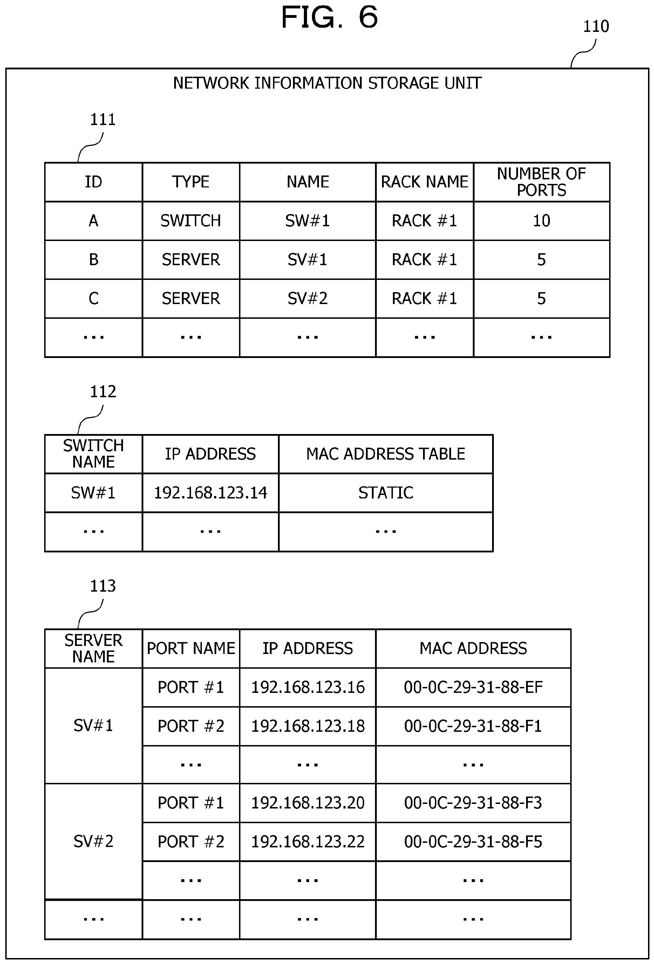

FIG. 6 is a diagram illustrating an example of information of the devices included in the network. The network information storage unit 110 stores the device information table 111, the switch information table 112, and the server information table 113. The information to be registered in the device information table 111, the switch information table 112, and the server information table 113 is input by the administrator 21 when each device is introduced to the network 30, for example.

The information on each of the devices (switches and servers) included in the network 30 is registered in the device information table 111. The device information table 111 includes fields of ID, type, name, rack name, and number of ports. Information for identifying each device is set in the ID field. Information indicating whether the device is a switch or a server is set in the type field. The name of the device is set in the name field. The name of a rack in which the device is installed is set in the rack name field. The number of ports included in the device is set in the number of ports field.

Information on switches included in the network 30 is registered in the switch information table 112. The switch information table 112 includes fields of switch name, IP address, and MAC address table. The name of each switch is set in the switch name field. The IP address of the switch is set in the IP address field. Information indicating whether the MAC address table of the switch is statically set or dynamically set is set in the MAC address table field.

Information on each of the server ports of each of the servers included in the network 30 is registered in the server information table 113. The server information table 113 includes fields of server name, port name, IP address, and MAC address. The name of each server is set in the server name field. The name of each server port is set in the port name field. The IP address of the server port is set in the IP address field. The MAC address of the server port is set in the MAC address field.

Next, description will be given of determinations that the controller unit 130 makes for calculating the evaluation values. First, a rack determination will be described.

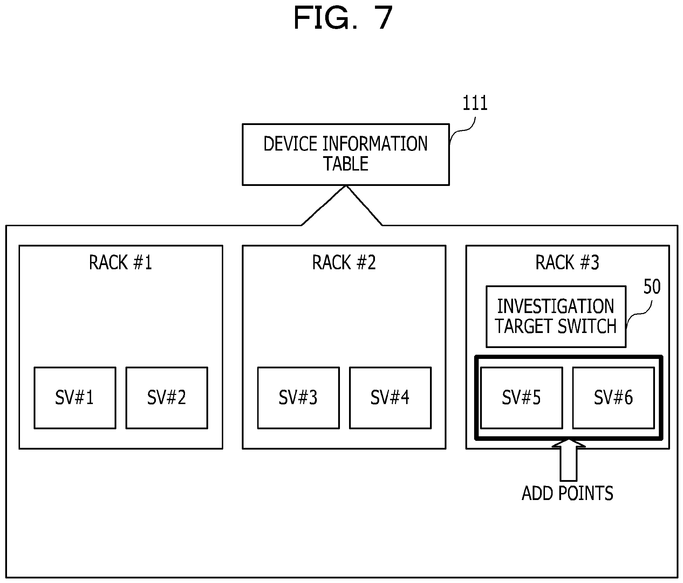

FIG. 7 is a diagram illustrating an example of the rack determination. In the rack determination, the controller unit 130 adds points to the evaluation values based on whether or not each server and the investigation target switch 50 are installed in the same rack.

As an example, the device information table 111 indicates that a SV #1 and a SV #2 are installed in a rack #1. The device information table 111 indicates that a SV #3 and a SV #4 are installed in a rack #2. The device information table 111 indicates that an investigation target switch 50, a SV #5, and a SV #6 are installed in a rack #3. In this case, the controller unit 130 adds points to the evaluation value for each of the server ports of the SV #5 and the SV #6 installed in the same rack #3 as the investigation target switch 50 with respect to each of the switch ports of the investigation target switch 50.

As described above, the controller unit 130 adds points to the evaluation values according to the rack determination. A device in a data center network like the network 30 is more likely to be coupled to a device installed in the same rack than to a device installed in a different rack. For this reason, the controller unit 130 is capable of calculating the appropriate evaluation values by adding points to the evaluation value with respect to each switch port of the investigation target switch 50, for each server port of a server installed in the same rack as the investigation target switch 50.

Next, an address table determination will be described.

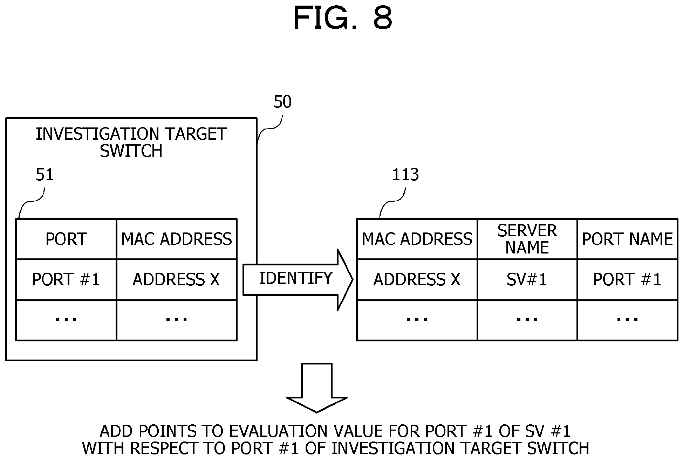

FIG. 8 is a diagram illustrating an example of the address table determination. The investigation target switch 50 includes a MAC address table 51. In the address table determination, the controller unit 130 adds points to the evaluation values based on the MAC address table 51.

As an example, an address X is registered in the MAC address table 51 as a MAC address of a port coupled to a port #1 of the investigation target switch 50. The controller unit 130 refers to the server information table 113 and identifies the server name of SV #1 and the server port name of port #1 associated with the address X. In this case, the controller unit 130 adds points to the evaluation value for the port #1 of the SV #1 with respect to the port #1 of the investigation target switch 50.

As described above, the controller unit 130 adds points to the evaluation values according to the address table determination. Since the MAC address table 51 is dynamically set and changed as appropriate in accordance with every coupled device, the MAC address table 51 is highly likely to indicate the port coupled to each port of the investigation target switch 50. Accordingly, the controller unit 130 is capable of calculating the appropriate evaluation values by adding points to the evaluation value for a server port with respect to the switch port indicated as the coupled port in the MAC address table 51.

Next, a communication traffic determination will be described.

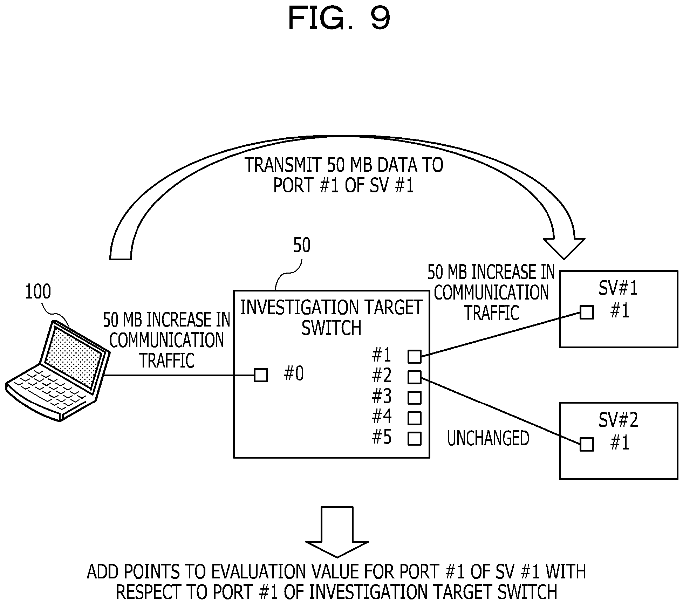

FIG. 9 is a diagram illustrating an example of the communication traffic determination. In the communication traffic determination, the controller unit 130 adds points to the evaluation value based on the cumulative communication traffic of each port of the investigation target switch 50 before and after the data transmission to a server port.

As an example, the administration terminal 100 is coupled to a port #0 of the investigation target switch 50. The controller unit 130 transmits 50 MB data to the port #1 of the SV #1. The controller unit 130 causes the communication monitoring unit 140 to acquire the cumulative communication traffic of each switch port of the investigation target switch 50 before and after the data transmission. It is assumed that the cumulative communication traffics of the port #0 and the port #1 of the investigation target switch 50 are increased by 50 MB, and the cumulative communication traffics of the other switch ports (for example, a port #2) of the investigation target switch 50 are unchanged. In this case, the controller unit 130 adds points to the evaluation value for the port #1 of the SV #1 with respect to the port #1 of the investigation target switch 50.

As described above, the controller unit 130 adds the points to the evaluation values according to the communication traffic determination. When data is transmitted, the cumulative communication traffic is increased in a switch port on a communication path of the data. For this reason, there is a high possibility that a switch port whose cumulative communication traffic is increased before and after the data transmission to a server port is coupled to the server port to which the data is transmitted. Accordingly, the controller unit 130 is capable of calculating the appropriate evaluation values by adding points to the evaluation value for a server port to which data is transmitted with respect to a switch port whose cumulative communication traffic is increased before and after the data transmission to the server port.

Next, a communication speed determination will be described.

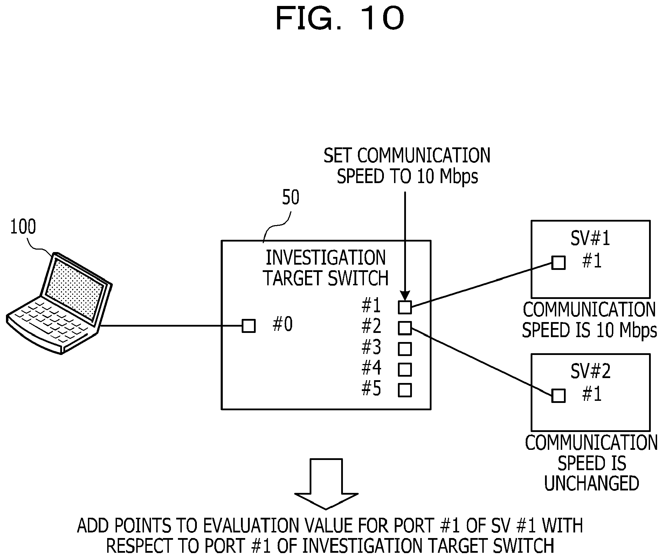

FIG. 10 is a diagram illustrating an example of the communication speed determination. In the communication speed determination, the controller unit 130 adds points to the evaluation value based on the communication speed of each server port before and after a change in the communication speed of a switch port.

As an example, the administration terminal 100 is connected to the port #0 of the investigation target switch 50. For example, the controller unit 130 causes the communication monitoring unit 140 to set the communication speed of the port #1 of the investigation target switch 50 to 10 Mbps. The controller unit 130 causes the communication monitoring unit 140 to acquire the communication speed of each server port before and after the change in the communication speed. It is assumed that the communication speed of the port #1 of the SV #1 is changed to 10 Mbps, and the communication speeds of the other server ports (for example, the port #1 of the SV #2) are unchanged. In this case, the controller unit 130 adds points to the evaluation value for the port #1 of the SV #1 with respect to the port #1 of the investigation target switch 50.

As described above, the controller unit 130 adds points to the evaluation values according to the communication speed determination. When the communication speed of a switch port is changed, the communication speed of the communication partner is also changed. For this reason, there is a high possibility that a server port whose communication speed is changed along with a change in the communication speed of a switch port is coupled to the switch port whose communication speed is changed. Accordingly, the controller unit 130 is capable of calculating the appropriate evaluation values by adding points to the evaluation value for a certain server port whose communication speed is changed along with a change in the communication speed of a switch port, with respect to the switch port having a high possibility of being connected to the certain server port.

Next, a link determination will be described.

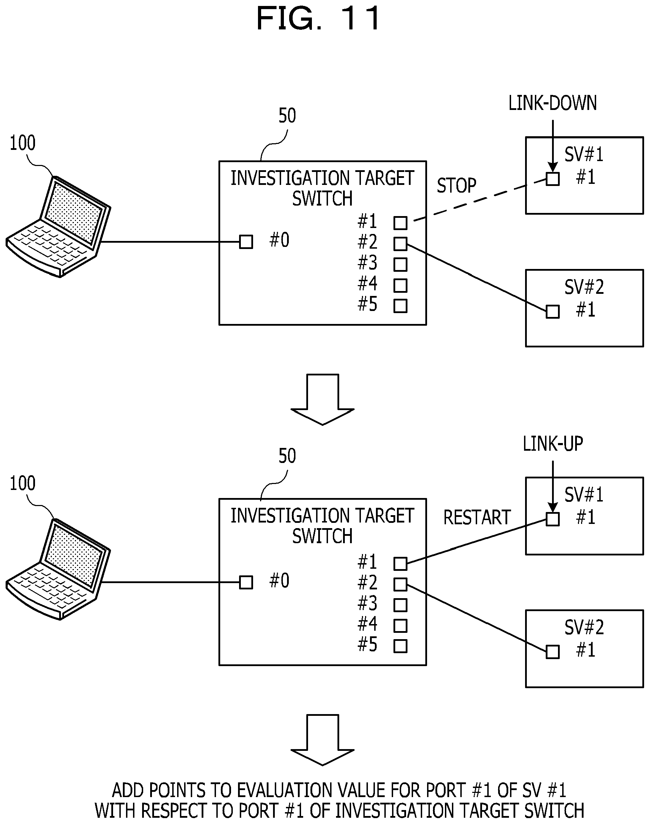

FIG. 11 is a diagram illustrating an example of the link determination. In the link determination, the controller unit 130 adds points to the evaluation value based on the communication status of a switch port before and after a link-down and a link-up of a server port.

As an example, the administration terminal 100 is coupled to the port #0 of the investigation target switch 50. The controller unit 130 causes the communication monitoring unit 140 to acquire the communication status of each switch port of the investigation target switch 50 before and after a link-down of the port #1 of the SV #1. For example, the port #1 of the SV #1 is linked down when the administrator 21 pulls out a cable coupled to the port #1 of the SV #1. It is assumed that communication of the port #1 of the investigation target switch 50 is stopped.

Then, the controller unit 130 causes the communication monitoring unit 140 to acquire the communication status of each switch port of the investigation target switch 50 before and after a link-up of the port #1 of the SV #1. For example, the port #1 of the SV #1 is linked up when the administrator 21 couples the cable, which is pulled out for the link-down, to the port #1 of the SV #1. It is assumed that the communication of the port #1 of the investigation target switch 50 is restarted. In this case, the controller unit 130 adds points to the evaluation value for the port #1 of the SV #1 with respect to the port #1 of the investigation target switch 50.

As described above, the controller unit 130 adds points to the evaluation values according to the link determination. When a server port is linked down, the communication of the switch port of the communication partner is also stopped. When the server port is linked up, the communication of the switch port of the communication partner is also restarted. For this reason, there is a high possibility that a switch port in which the communication is stopped along with a link-down and the communication is restarted along with a link-up is connected to a server port having the link-down and the link-up. Accordingly, the controller unit 130 is capable of calculating the appropriate evaluation values by adding points to the evaluation value for a server port having a link-down and a link-up, with respect to the switch port whose communication is stopped along with the link-down and is restarted along with the link-up.

Next, total summation of the evaluation values will be described next.

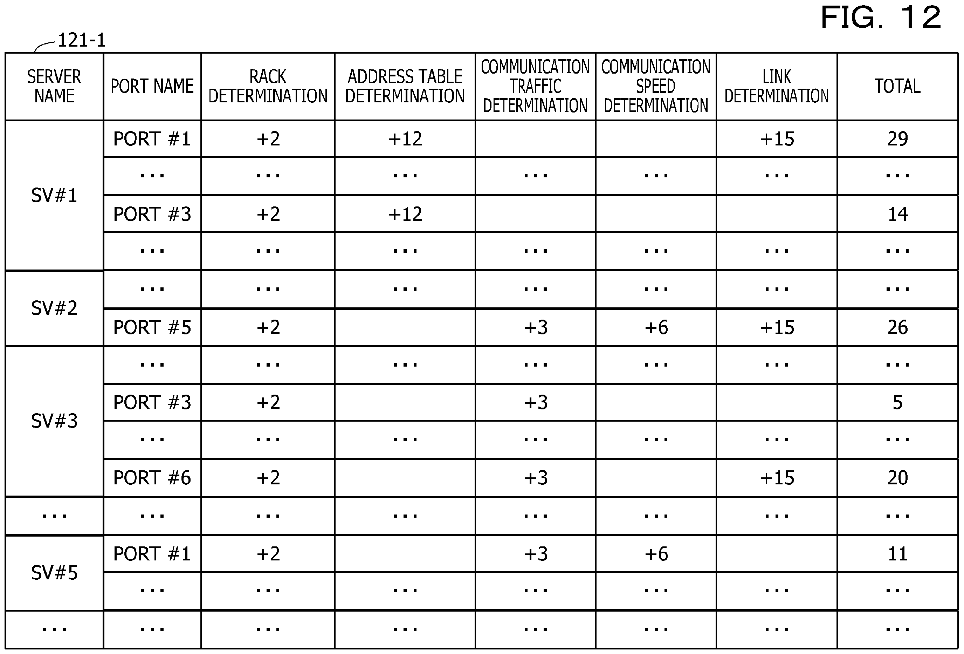

FIG. 12 is a diagram illustrating an example of the evaluation value table. Each of the evaluation value tables 121-1, 121-2, ... registers the evaluation values for each of the server ports of the servers included in the network 30 with respect to the associated switch port. Although the evaluation value table 121-1 will be described below, the evaluation value tables 121-2, ... have the same fields as the evaluation value table 121-1.

The evaluation value table 121-1 includes fields of server name, port name, rack determination, address table determination, communication traffic determination, communication speed determination, link determination, and total. The name of each server is set in the server name field. The name of each server port is set in the port name field. The rack determination field is set to "+2" in a case where points are to be added according to the rack determination. The address table determination field is set to "+12" in a case where points are to be added according to the address table determination. The communication traffic determination field is set to "+3" in a case where points are to be added according to the communication traffic determination. The communication speed determination field is set to "+6" in a case where points are to be added according to the communication speed measurement. The link determination field is set to "+15" in a case where points are to be added according to the link determination. The total field is set to the total of the points added according to all the determinations.

Here, a score for each determination will be described. The score for the rack determination is set to 2 points. The rack determination is a determination for each group of server ports installed in the same rack, while the communication traffic determination is a determination for each server port. Accordingly, the score for the communication traffic determination is set to 3 points obtained by adding 1 point to the score (2 points) for the rack determination.

In the communication traffic determination, when the administration terminal 100 transmits data to a certain server, the certain server may perform other communication and the other communication may affect the measurement of the cumulative communication traffic. In contrast, in the communication speed determination, occurrence of other communication to the server does not affect the communication speed. Accordingly, the score for the communication speed determination is set to 6 points obtained by adding 1 point to the sum of the score for the rack determination (2 points) and the score for the communication traffic determination (3 points).

The MAC address table 51 referred to in the address table determination indicates actual coupling relationships in many cases. Accordingly, the score for the address table determination is set to 12 points obtained by adding 1 point to the sum of the score for the rack determination (2 points), the score for the communication traffic determination (3 points), and the score for the communication speed determination (6 points).

In the link determination, whether or not there is an actual connecting is determined. Accordingly, the score for the link determination is set to 15 points obtained by adding 1 point to the sum of the score for the rack determination (2 points) and the score for the address table determination (12 points). The above scores are just examples, and the score for each determination may be set to a score different from the above.

Next, screen display by the GUI processing unit 150 will be described.

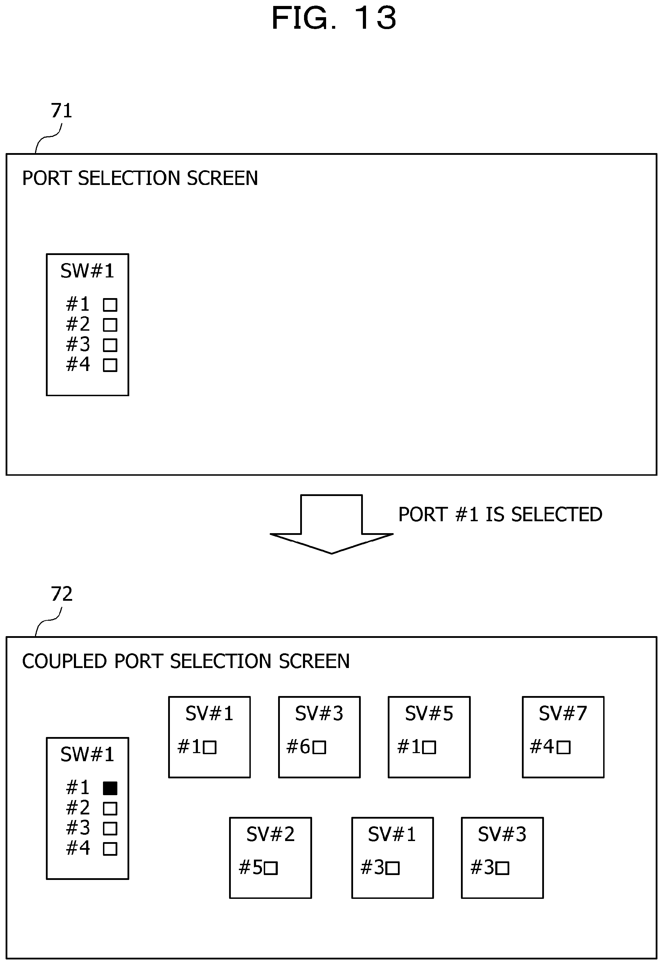

FIG. 13 is a diagram illustrating an example of a screen for creating a network map. For creating the network map 60, the GUI processing unit 150 displays a port selection screen 71 on the monitor 41.

The port selection screen 71 is a screen for receiving a selection of a switch port for which a coupled port is desired to be set in the network map 60. The port selection screen 71 contains figures representing multiple switch ports. For example, the port selection screen 71 contains figures representing the respective ports #1 to #4 of the SW #1. It is assumed that the GUI processing unit 150 receives a selection of the port #1. In this case, the GUI processing unit 150 acquires the evaluation value table for the port #1 of the SW #1 (for example, the evaluation value table 121-1) among the evaluation value tables 121-1, 121-2, .... The GUI processing unit 150 displays a coupled port selection screen 72 on the monitor 41 based on the evaluation value table 121-1.

The coupled port selection screen 72 is a screen for receiving a selection of a server port as a port in the network map 60 to be coupled to the switch port selected on the port selection screen 71. The coupled port selection screen 72 contains a figure representing the switch port selected on the port selection screen 71 and figures representing multiple server ports. On the coupled port selection screen 72, the figures representing the respective server ports are arranged in descending order of the evaluation value starting from near the figure representing the selected switch port.

For example, in the evaluation value table 121-1, the evaluation values are assumed to be larger in the order of the port #1 of SV #1, the port #5 of the SV #2, the port #6 of the SV #3, the port #3 of the SV #1, the port #1 of the SV #5, the port #3 of the SV #3, and the port #4 of the SV #7. In this case, on the coupled port selection screen 72, the port #1 of the SV #1, the port #5 of the SV #2, the port #6 of the SV #3, the port #3 of the SV #1, the port #1 of the SV #5, the port #3 of the SV #3, and the port #4 of the SV #7 are arranged in this order starting from near the figure representing the port #1 of the SW #1. For example, when an x coordinate of the figure representing the server port having the largest evaluation value on the coupled port selection screen 72 is 1 and the x coordinate of the figure representing the server port having the smallest evaluation value is 0, the x coordinate of the figure representing each server port is expressed by (evaluation value - smallest evaluation value)/(largest evaluation value - smallest evaluation value). The figures representing the respective server ports are staggered in an upper stage and a lower stage alternately (for example, in a W-letter format) starting from near the figure representing the port #1 of the SW #1.

The GUI processing unit 150 receives an operation of selecting any one of the figures representing the server ports on the coupled port selection screen 72. For example, the GUI processing unit 150 receives an input of linking the figure representing the port #1 of the SW #1 to any one of the figures representing the server ports on the coupled port selection screen 72. For example, the GUI processing unit 150 reflects the selection of the to-be-coupled server port in the network map 60. For example, in a case where the port #1 of the SV #1 is selected on the coupled port selection screen 72, the GUI processing unit 150 registers information indicating that the port #1 of the SW #1 and the port #1 of the SV #1 are coupled to each other in the network map 60.

As described above, the GUI processing unit 150 displays the coupled port selection screen 72 and receives a selection of a port to be coupled in the network map 60. In this way, the GUI processing unit 150 is capable of providing a display that enables a user (for example, the administrator 21) to easily select a server port having a high possibility of being coupled to the switch port selected on the port selection screen 71 in the network 30. Thus, the GUI processing unit 150 may facilitate creation of the network map 60.

Hereinafter, a procedure of an evaluation value calculation process is described in detail.

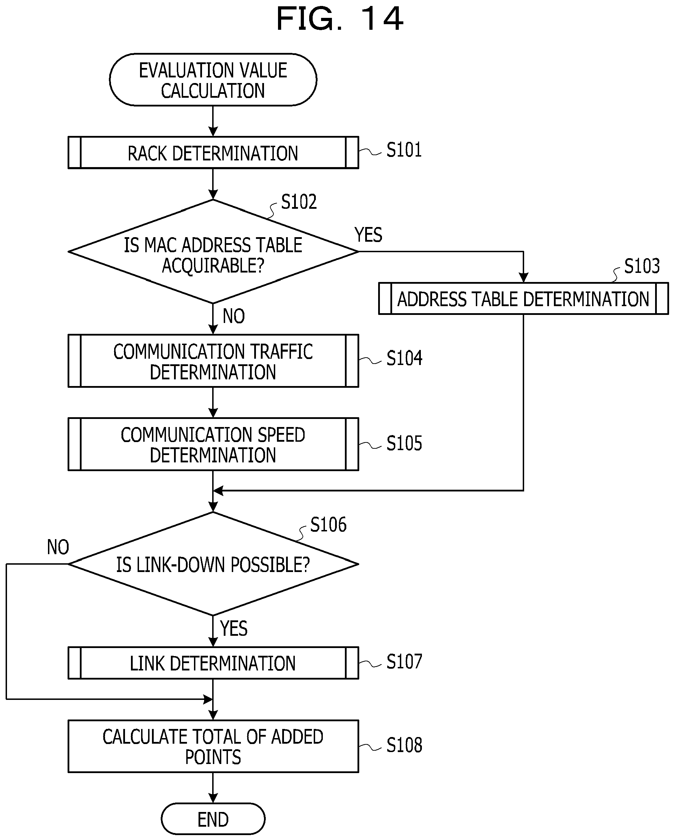

FIG. 14 is a flowchart illustrating an example of the procedure of the evaluation value calculation process. Hereinafter, the process illustrated in FIG. 14 will be described in accordance with step numbers.

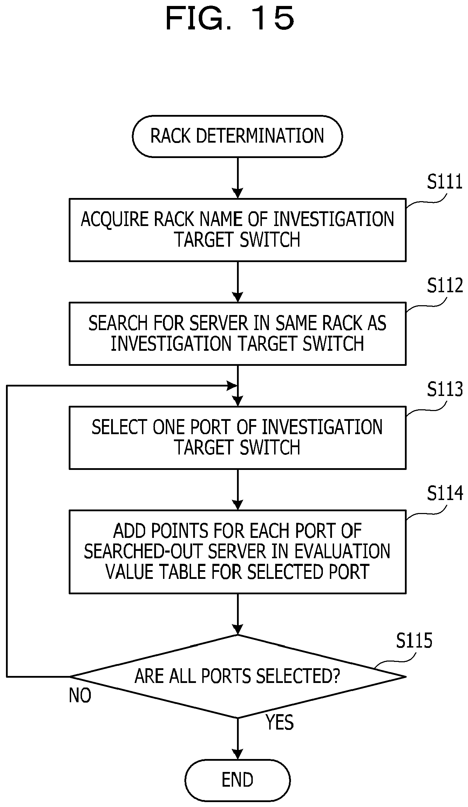

[Step S101] The controller unit 130 executes the rack determination process. Details of the rack determination process will be described later (see FIG. 15).

[Step S102] The controller unit 130 determines whether or not the MAC address table 51 is acquirable from the investigation target switch 50. For example, the controller unit 130 refers to a record in which the name of the investigation target switch 50 is set in the switch name field of the switch information table 112. When information indicating that the MAC address table is dynamically set is set in the MAC address table field of the record referred to, the controller unit 130 determines that the MAC address table 51 is acquirable from the investigation target switch 50. When determining that the MAC address table 51 is acquirable from the investigation target switch 50, the controller unit 130 advances the process to step S103. When determining that the MAC address table 51 is not acquirable from the investigation target switch 50, the controller unit 130 advances the process to step S104.

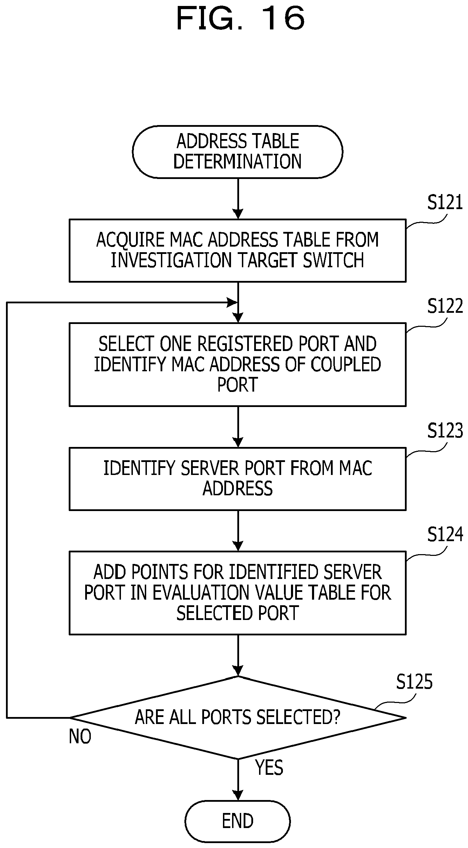

[Step S103] The controller unit 130 executes the address table determination process. Details of the address table determination process will be described later (see FIG. 16). After that, the process proceeds to step S106.

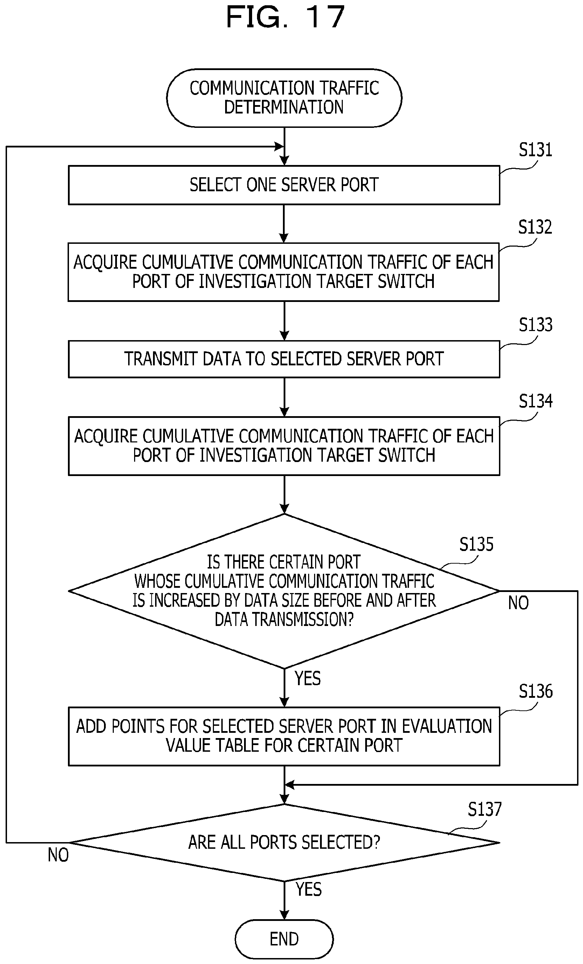

[Step S104] The controller unit 130 executes the communication traffic determination process. Details of the communication traffic determination process will be described later (see FIG. 17).

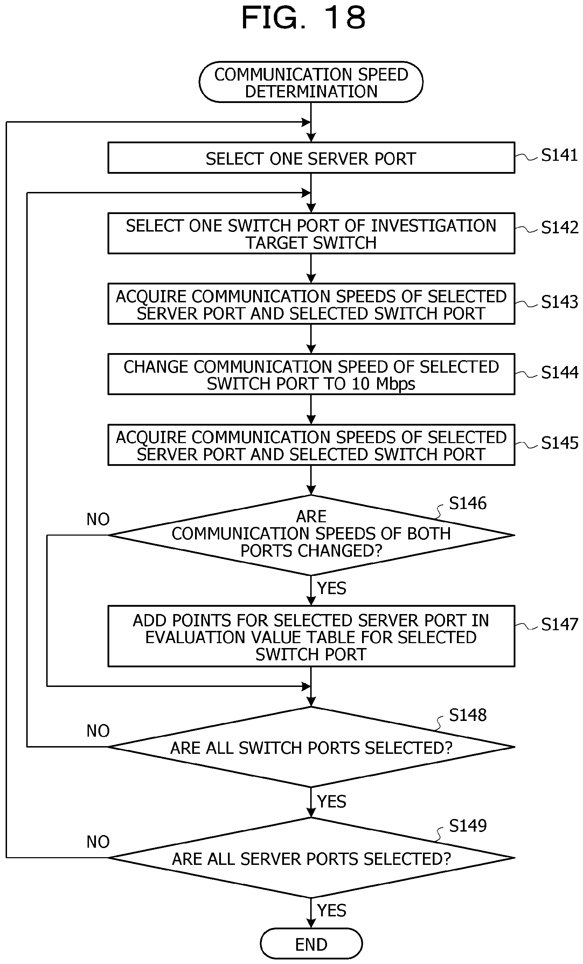

[Step S105] The controller unit 130 executes the communication speed determination process. Details of the communication speed determination process will be described later (see FIG. 18).

[Step S106] The controller unit 130 determines whether or not it is possible to link down a server included in the network 30. When determining that it is possible to link down the server included in the network 30, the controller unit 130 advances the process to step S107. When determining that it is not possible to link down the server included in the network 30, the controller unit 130 advances the process to step S108.

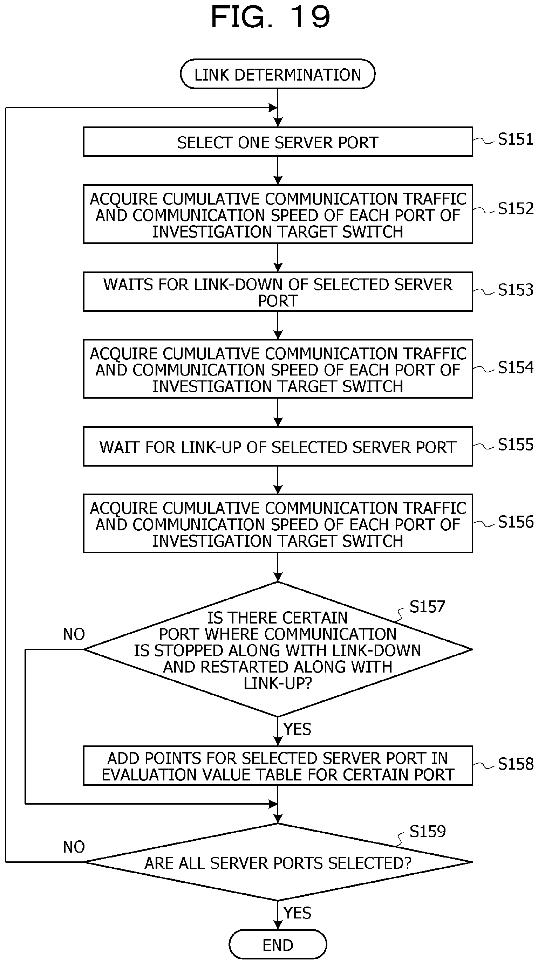

[Step S107] The controller unit 130 executes the link determination process. Details of the link determination process will be described later (see FIG. 19).

[Step S108] The controller unit 130 calculates the total of the points added according to all the determinations. For example, the controller unit 130 sets the total value of the points added according to all the determinations in the total field of the evaluation value table for each switch port of the investigation target switch 50 among the evaluation value tables 121-1, 121-2, ....

In this way, the evaluation value indicating the possibility that each of the server ports of the servers included in the network 30 is coupled to a switch port of the investigation target switch 50 is calculated. Next, a procedure of the rack determination process will be described in detail.

FIG. 15 is a flowchart illustrating an example of the procedure of the rack determination process. Hereinafter, the process illustrated in FIG. 15 will be described in accordance with step numbers.

[Step S111] The controller unit 130 acquires the rack name of the rack in which the investigation target switch 50 is installed. For example, the controller unit 130 refers to a record in which the name of the investigation target switch 50 is set in the name field of the device information table 111. The controller unit 130 acquires the rack name from the rack name field of the record referred to.

[Step S112] The controller unit 130 searches for a server installed in the same rack as the investigation target switch 50. For example, the controller unit 130 searches the device information table 111 for a record in which the rack name acquired in step S111 is set in the rack name field and information indicating a server is set in the type field. The controller unit 130 acquires the server name set in the name field of the searched-out record as the server name of the server installed in the same rack as the investigation target switch 50.

[Step S113] The controller unit 130 selects one of the switch ports of the investigation target switch 50.

[Step S114] The controller unit 130 adds points for each server port of the server searched out in step S112 in the evaluation value table for the switch port selected in step S113. For example, the controller unit 130 sets "+2" in the rack determination field of the record in which the server name acquired in step S112 is set in the server name field in the evaluation value table for the switch port selected in step S113 among the evaluation value tables 121-1, 121-2, ....

[Step S115] The controller unit 130 determines whether or not all the switch ports of the investigation target switch 50 are already selected. When determining that all the switch ports of the investigation target switch 50 are already selected, the controller unit 130 ends the process. When determining that an unselected switch port of the investigation target switch 50 remains, the controller unit 130 advances the process to step S113.

As described above, the controller unit 130 adds points to the evaluation value with respect to each switch port of the investigation target switch 50 for each server port of the server installed in the same rack as the investigation target switch 50. A device in a network of a data center like the network 30 is more likely to be coupled to a device installed in the same rack than to a device installed in a different rack. Accordingly, the controller unit 130 may appropriately calculate the evaluation value indicating a possibility that each server port is coupled to the switch port by adding points to the evaluation value for each server port of the server installed in the same rack as the investigation target switch 50.

Next, a procedure of the address table determination process will be described in detail.

FIG. 16 is a flowchart illustrating an example of the procedure of the address table determination process. Hereinafter, the process illustrated in FIG. 16 will be described in accordance with step numbers.

[Step S121] The controller unit 130 acquires the MAC address table 51 from the investigation target switch 50.

[Step S122] The controller unit 130 selects one switch port registered in the MAC address table 51. The controller unit 130 identifies the MAC address of a server port coupled to the selected switch port from the MAC address table 51.

[Step S123] The controller unit 130 identifies the coupled server port from the MAC address identified in step S122. For example, the controller unit 130 searches for a record in which the MAC address identified in step S122 is set in the MAC address field of the server information table 113. The controller unit 130 acquires the server name set in the server name field and the port name set in the port name field of the searched-out record.

[Step S124] The controller unit 130 adds points for the server port identified in step S123 in the evaluation value table for the switch port selected in step S122. For example, the controller unit 130 identifies an evaluation value table for the switch port selected in step S122 among the evaluation value tables 121-1, 121-2, .... The controller unit 130 sets "+12" in the address table determination field of the record in which the server name and the port name acquired in step S123 are set in the server name field and the port name field of the identified evaluation value table.

[Step S125] The controller unit 130 determines whether or not all the switch ports registered in the MAC address table 51 are already selected. When determining that all the switch ports registered in the MAC address table 51 are already selected, the controller unit 130 ends the process. When determining that an unselected switch port registered in the MAC address table 51 remains, the controller unit 130 advances the process to step S122.

As described above, the controller unit 130 adds the points to the evaluation value for each server port whose MAC address is registered in the MAC address table 51 with respect to the switch port indicated as the coupled port in the MAC address table 51. Since the dynamically set MAC address table 51 is changed as appropriate according to every coupled device, the MAC address table 51 is highly likely to indicate the port coupled to each port of the investigation target switch 50. Accordingly, for a certain server port whose MAC address is registered in the MAC address table 51, the controller unit 130 may add points to the evaluation value with respect to the switch port having a high possibility of being connected to the certain server port, and thereby appropriately calculate the evaluation value.

Next, a procedure of the communication traffic determination process will be described in detail.

FIG. 17 is a flowchart illustrating an example of the procedure of the communication traffic determination process. Hereinafter, the process illustrated in FIG. 17 will be described in accordance with step numbers.

[Step S131] The controller unit 130 selects one server port. For example, the controller unit 130 selects one record registered in the server information table 113. The controller unit 130 acquires the server name set in the server name field and the port name set in the port name field of the selected record.

[Step S132] The communication monitoring unit 140 acquires the cumulative communication traffic of each switch port of the investigation target switch 50.

[Step S133] The controller unit 130 transmits 50 MB data to the server port selected in step S131. For example, the controller unit 130 acquires the IP address set in the IP address field of the record in the server information table 113 selected in step S131. The controller unit 130 transmits a 50 MB ping message to the acquired IP address.

[Step S134] The communication monitoring unit 140 acquires the cumulative communication traffic of each switch port of the investigation target switch 50.

[Step S135] The controller unit 130 determines whether or not there is a switch port in which the cumulative communication traffic is increased by the size of the transmitted data before and after the data transmission. For example, when there is a switch port in which the cumulative communication traffic acquired in step S134 is higher by 50 MB than the cumulative communication traffic acquired in step S132, the controller unit 130 determines that there is the switch port in which the cumulative communication traffic is increased by the size of the transmitted data before and after the data transmission. When determining that there is the switch port in which the cumulative communication traffic is increased by the size of the transmitted data before and after the data transmission, the controller unit 130 advances the process to step S136. When determining that there is no switch port in which the cumulative communication traffic is increased by the size of the transmitted data before and after the data transmission, the controller unit 130 advances the process to step S137.

[Step S136] The controller unit 130 adds points for the server port selected in step S131 in the evaluation value table for the switch port in which the increase in the cumulative communication traffic is determined in step S135. For example, the controller unit 130 identifies the evaluation value table for the switch port in which the increase in the cumulative communication traffic is determined in step S135 among the evaluation value tables 121-1, 121-2, .... The controller unit 130 sets "+3" in the communication traffic determination field of the record in which the server name and the port name acquired in step S131 are set in the server name field and the port name field of the identified evaluation value table.

[Step S137] The controller unit 130 determines whether or not all the server ports are already selected. When determining that all the server ports are already selected, the controller unit 130 ends the process. When determining that an unselected server port remains, the controller unit 130 advances the process to step S131.

As described above, for a server port to which data is transmitted, the controller unit 130 adds points to the evaluation value with respect to the switch port in which the cumulative communication traffic is increased by the size of the transmitted data before and after the data transmission. Since transmission of data increases the cumulative communication traffic in a switch port on a communication path, there is a high possibility that a switch port in which the cumulative communication traffic is increased before and after the data transmission to a server port is coupled to the server port to which the data is transmitted. Accordingly, for a certain server port to which data is transmitted, the controller unit 130 may add points to the evaluation value with respect to the switch port having a high possibility of being connected to the certain server port, and thereby appropriately calculate the evaluation value.

Next, a procedure of the communication speed determination process will be described in detail.

FIG. 18 is a flowchart illustrating an example of the procedure of the communication speed determination process. Hereinafter, the process illustrated in FIG. 18 will be described in accordance with step numbers.

[Step S141] The controller unit 130 selects one server port. For example, the controller unit 130 selects one record registered in the server information table 113. The controller unit 130 acquires the server name set in the server name field and the port name set in the port name field of the selected record.

[Step S142] The controller unit 130 selects one switch port of the investigation target switch 50.

[Step S143] The communication monitoring unit 140 acquires the communication speeds of the server port selected in step S141 and the switch port selected in step S142.

[Step S144] The communication monitoring unit 140 changes the communication speed of the switch port selected in step S142 to 10 Mbps.

[Step S145] The communication monitoring unit 140 acquires the communication speeds of the server port selected in step S141 and the switch port selected in step S142.

[Step S146] The controller unit 130 determines whether or not the communication speeds of the server port selected in step S141 and the switch port selected in step S142 (both ports) are changed before and after the change in the communication speed. For example, when the communication speeds of both ports acquired in step S145 are 10 Mbps, the controller unit 130 determines that the communication speeds of both ports are changed before and after the change in the communication speed. When determining that the communication speeds of both ports are changed before and after the change in the communication speed, the controller unit 130 advances the process to step S147. When determining that the communication speeds of both ports are unchanged before and after the change in the communication speed, the controller unit 130 advances the process to step S148.

[Step S147] The controller unit 130 adds points for the server port selected in step S141 in the evaluation value table for the switch port selected in step S142. For example, the controller unit 130 identifies the evaluation value table for the switch port selected in step S142 among the evaluation value tables 121-1, 121-2, .... The controller unit 130 sets "+6" in the communication traffic determination field of the record in which the server name and the port name acquired in step S141 are set in the server name field and the port name field of the identified evaluation value table.

[Step S148] The controller unit 130 determines whether or not all the switch ports of the investigation target switch 50 are already selected. When determining that all the switch ports of the investigation target switch 50 are already selected, the controller unit 130 advances the process to step S149. When determining that an unselected switch port of the investigation target switch 50 remains, the controller unit 130 advances the process to step S142.

[Step S149] The controller unit 130 determines whether or not all the server ports are already selected. When determining that all the server ports are already selected, the controller unit 130 ends the process. When determining that the unselected server port remains, the controller unit 130 advances the process to step S141.

As described above, for a server port in which the communication speed is changed along with a change in the communication speed of a switch port, the controller unit 130 adds points to the evaluation value with respect to the switch port in which the communication speed is changed. When the communication speed of the switch port is changed, the communication speed of the communication partner is also changed. For this reason, a server port in which the communication speed is changed along with a change in the communication speed of a switch port has a high possibility of being coupled to the switch port in which the communication speed is changed. Accordingly, for a certain server port in which the communication speed is changed along with a change in the communication speed of a switch port, the controller unit 130 may add points to the evaluation value with respect to the switch port having a high possibility of being connected to the certain server port, and thereby appropriately calculate the evaluation value.

Next, a procedure of the link determination process will be described in detail.

FIG. 19 is a flowchart illustrating an example of the procedure of the link determination process. Hereinafter, the process illustrated in FIG. 19 will be described in accordance with step numbers.

[Step S151] The controller unit 130 selects one server port. For example, the controller unit 130 selects one record registered in the server information table 113. The controller unit 130 acquires the server name set in the server name field and the port name set in the port name field of the selected record.

[Step S152] The communication monitoring unit 140 acquires the cumulative communication traffic and the communication speed of each switch port of the investigation target switch 50.

[Step S153] The controller unit 130 waits for a link-down of the server port selected in step S151. For example, the controller unit 130 waits for the administrator 21 to link down the server port selected in step S151 by pulling out a cable coupled to the server port.

[Step S154] The communication monitoring unit 140 acquires the cumulative communication traffic and the communication speed of each switch port of the investigation target switch 50.

[Step S155] The controller unit 130 waits for a link-up of the server port selected in step S151. For example, the controller unit 130 waits for the administrator 21 to link up the server port selected in step S151 by coupling the cable pulled out in step S153 to the server port.

[Step S156] The communication monitoring unit 140 acquires the cumulative communication traffic and the communication speed of each switch port of the investigation target switch 50.

[Step S157] The controller unit 130 determines whether or not there is a switch port in which communication is stopped along with the link-down and is restarted along with the link-up. For example, the controller unit 130 determines that a switch port in which the cumulative communication traffic acquired in step S154 is equal to the cumulative communication traffic acquired in step S152 and the communication speed acquired in step S154 is 0 Mbps stops the communication along with the link-down. The controller unit 130 determines that a switch port in which the communication speed acquired in step S154 is 0 Mbps and the communication speed acquired in step S156 is not 0 Mbps restarts the communication along with the link-up.

When determining that there is a switch port in which communication is stopped along with the link-down and is restarted along with the link-up, the controller unit 130 advances the process to step S158. When determining that there is no switch port in which communication is stopped along with the link-down and is restarted along with the link-up, the controller unit 130 advances the process to step S159.

[Step S158] The controller unit 130 adds points for the server port selected in step S151 in the evaluation value table for the switch port determined in step S157 as the switch port in which communication is stopped along with the link-down and is restarted along with the link-up. For example, from among the evaluation value tables 121-1, 121-2, ..., the controller unit 130 identifies an evaluation value table for the switch port determined in step S157 as the switch port in which communication is stopped along with the link-down and is restarted along with the link-up. The controller unit 130 sets "+15" in the communication traffic determination field of the record in which the server name and the port name acquired in step S151 are set in the server name field and the port name field of the identified evaluation value table.

[Step S159] The controller unit 130 determines whether or not all the server ports are already selected. When determining that all the server ports are already selected, the controller unit 130 ends the process. When determining that an unselected server port remains, the controller unit 130 advances the process to step S151.

As described above, for a server port having a link-down and a link-up, the controller unit 130 adds points to the evaluation value with respect to a switch port in which the communication is stopped along with the link-down and is restarted along with the link-up. When a server port is linked down, the communication of a switch port of the communication partner is also stopped. When the server port is linked up, the communication of the switch port of the communication partner is also restarted.

For this reason, there is a high possibility that a switch port in which the communication is stopped along with a link-down and the communication is restarted along with a link-up is coupled to a server port having the link-down and the link-up. Accordingly, for a certain server port which is linked down and linked up, the controller unit 130 may add points to the evaluation value with respect to a switch port having a high possibility of being connected to the certain server port, and thereby appropriately calculate the evaluation value.

Next, a procedure of a process of creating the network map 60 will be described in detail.

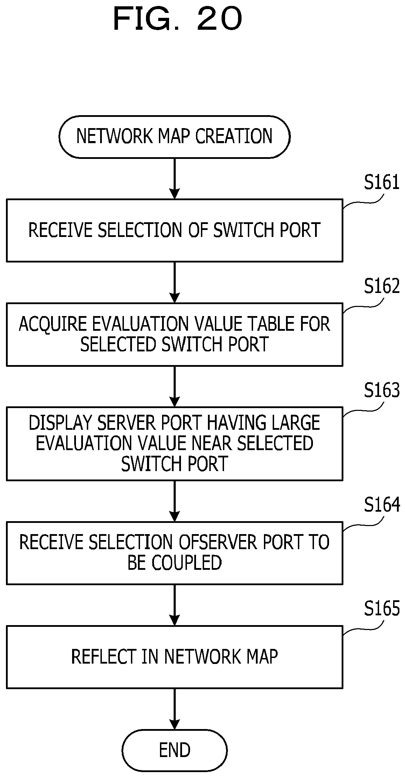

FIG. 20 is a flowchart illustrating an example of a procedure of a network map creation process. Hereinafter, the process illustrated in FIG. 20 will be described in accordance with step numbers.

[Step S161] The GUI processing unit 150 receives a selection of a switch port. For example, the GUI processing unit 150 displays the port selection screen 71 on the monitor 41. The GUI processing unit 150 receives an operation of selecting any one of the figures representing the switch ports on the port selection screen 71.

[Step S162] The GUI processing unit 150 acquires an evaluation value table for the switch port selected in step S161 among the evaluation value tables 121-1, 121-2, ....

[Step S163] The GUI processing unit 150 refers to the evaluation value table acquired in step S162 and thereby displays figures representing multiple server ports in such a way that the figure representing a server port having a large evaluation value is near to the figure representing the switch port selected in step S161. For example, the GUI processing unit 150 displays the coupled port selection screen 72 on the monitor 41.

[Step S164] The GUI processing unit 150 receives a selection of a port to be coupled to the switch port selected in step S161 in the network map 60. For example, the GUI processing unit 150 receives an operation of selecting any one of the figures representing the server ports on the coupled port selection screen 72.

[Step S165] The GUI processing unit 150 reflects the selection of the to-be-coupled server port in the network map 60. For example, the GUI processing unit 150 registers information indicating that the switch port selected in step S161 and the server port selected in step S165 are connected to each other in the network map 60.

As described above, the GUI processing unit 150 displays the figure representing a server port having a large evaluation value with respect to a switch port near the figure representing this switch port. In this way, the GUI processing unit 150 is capable of providing a display that enables one, when selecting a port to be coupled to a certain switch port in the network map 60, to easily select a server port having a high possibility of being connected to the certain switch port in the network 30. Thus, the GUI processing unit 150 may facilitate creation of the network map 60.

Although the embodiments have been exemplified above, the configuration of each unit described in the embodiments may be replaced with another configuration having similar functions. Arbitrary other components or steps may be added. Arbitrary two or more of the configurations (features) according to the above-described embodiments may be combined with each other.

## Claims

1. A network map creation support program in which a computer executes performs processing of:
calculating, for each of a plurality of nodes, an evaluation value indicating a possibility that the node is connected to a target switch port of the plurality of switches based on information indicating measurement results related to communication data of a network including the plurality of nodes and the plurality of switches, or a coupling environment of the plurality of nodes and the plurality of switches in the network;
displaying figures respectively representing the plurality of nodes in descending order of the evaluation value starting from a position nearest to a figure representing the target switch port; and
receiving a selection of one of the plurality of nodes as a node to be coupled to the target switch port in a network map.

2. The network map creation support program according to claim 1, wherein the calculating includes calculating the evaluation value for each of the plurality of nodes based on whether or not each of the plurality of nodes is installed in the same rack as the switch including the target switch port.

3. The network map creation support program according to claim 1 or 2, wherein
the calculating includes calculating the evaluation value for each of the plurality of nodes based on information indicating a communication address of each of the plurality of node and a communication address of a device coupled to the target switch port.

4. The network map creation support program according to any one of claims 1 to 3, wherein
the calculating includes calculating the evaluation value for each of the plurality of nodes based on measurement results of a cumulative communication traffic of the target switch port before and after data transmission to each of the plurality of node.

5. The network map creation support program according to any one of claims 1 to 4, wherein
the calculating includes calculating the evaluation value for each of the plurality of nodes based on measurement results of a communication speed of each of the plurality of node before and after a communication speed of the target switch port is changed to a predetermined speed.

6. The network map creation support program according to any one of claims 1 to 5, wherein
the calculating includes calculating the evaluation value for each of the plurality of nodes based on whether or not communication of the target switch port is stopped when each of the plurality of node is linked down.

7. The network map creation support program according to any one of claims 1 to 6, wherein the processing further includes:
calculating the evaluation value for each of a plurality of node ports of the plurality of nodes;
displaying figures respectively representing the plurality of node ports in descending order of the evaluation value starting from a position nearest to the figure representing the target switch port; and
receiving a selection of one of the plurality of node ports as a node port to be coupled to the target switch port in the network map.

8. An information processing apparatus comprising:
a memory configured to store a network map; and
a processor configured to:
calculate, for each of a plurality of nodes, an evaluation value indicating a possibility that the node is connected to a target switch port of the plurality of switches based on information indicating measurement results related to communication data of a network including the plurality of nodes and the plurality of switches, or a coupling environment of the plurality of nodes and the plurality of switches in the network,
display figures respectively representing the plurality of nodes in descending order of the evaluation value starting from a position nearest to a figure representing the target switch port, and
receive a selection of one of the plurality of nodes as a node to be coupled to the target switch port in the network map.

9. A network map creation support method comprising:
calculating, for each of a plurality of nodes, an evaluation value indicating a possibility that the node is connected to a target switch port of the plurality of switches based on information indicating measurement results related to communication data of a network including the plurality of nodes and the plurality of switches, or a coupling environment of the plurality of nodes and the plurality of switches in the network;
displaying figures respectively representing the plurality of nodes in descending order of the evaluation value starting from a position nearest to a figure representing the target switch port; and
receiving a selection of one of the plurality of nodes as a node to be coupled to the target switch port in a network map.
